# EUROPEAN PATENT APPLICATION

(11) **EP 4 575 824 A1**
(43) Date of publication of application: **25.06.2025**
(21) Application number: 23218779.9
(22) Date of filing: 20.12.2023
(51) Int. Cl.: G06F 16/25, G08G 1/16

(54) **METHODS AND SYSTEMS FOR ACCESSING A DATASET COMPRISING A PLURALITY OF DATA SAMPLES FROM MULTIPLE DATA SOURCES**

(71) Applicant: Zenseact AB, 417 56 Göteborg (SE)
(72) Inventor: LUVÖ, Thomas, 443 60 Stenkullen (SE); PETERSSON, Christoffer, 426 58 Västra Frölunda (SE)
(74) Representative: Zacco Sweden AB

(57) **Abstract**

A method for accessing a dataset comprising a plurality of data samples from multiple data sources and related aspects are disclosed. The plurality of data samples includes sensor data samples and auxiliary data samples represented by sensor data embeddings and auxiliary data embeddings, respectively. The method comprises in response to obtaining a query embedding representing a query, identifying one or more embeddings within the multi-dimensional vector space based on a proximity to the obtained query embedding within the multi-dimensional vector space, and outputting one or more data samples within the dataset that are represented by the identified embeddings.

## Description

### TECHNICAL FIELD

The disclosed technology relates to methods and systems for accessing a dataset comprising a plurality of data samples from multiple data sources. In particular, but not exclusively the disclosed technology relates to methods and system for improving the accessibility and understanding of large datasets with data samples collected by Automated Driving Systems (ADSs) and auxiliary data samples related thereto.

### BACKGROUND

Machine learning (ML) algorithms and neural networks (NN) have gained a strong position in solving complicated problems in various domains such as classification, detection, identification, and segmentation tasks to name a few. The ability of these algorithms to perform complex and multidimensional tasks involving almost infinite data variations and combinations makes these models unequivocally well suited for the evermore-expanding big data applications of today. One specific area for which utilization of neural networks and deep learning models has presented ground-breaking possibilities is the emergence of Automated Driving Systems for vehicles.

During the last few years, the research and development activities related to autonomous vehicles have exploded in number and many different approaches are being explored. An increasing portion of modern vehicles have advanced driver-assistance systems (ADAS) to increase vehicle safety and more generally road safety. ADAS - which for instance may be represented by adaptive cruise control (ACC) collision avoidance system, forward collision warning, etc. - are electronic systems that may aid a driver of a vehicle. Today, there is ongoing research and development within a number of technical areas associated to both the ADAS and the Autonomous Driving (AD) fields. ADAS and AD will herein be referred to under the common term Automated Driving System (ADS) corresponding to all of the different levels of automation as for example defined by the SAE J3016 levels (0 - 5) of driving automation.

ADS solutions have already found their way into a majority of the new cars on the market with utilization prospects being only on the rise in the future. An ADS may be construed as a complex combination of various components that can be defined as systems where perception, decision making, and operation of the vehicle are performed by electronics and machinery instead of or in tandem with a human driver, and as introduction of automation into road traffic. This includes handling of the vehicle, destination, as well as awareness of surroundings. While the automated system has control over the vehicle, it allows the human operator to leave all or at least some responsibilities to the system. An ADS commonly combines a variety of sensors to perceive the vehicle's surroundings, such as e.g. radar, LIDAR, sonar, camera, navigation system e.g. GPS, odometer and/or inertial measurement units (IMUs), upon which advanced control systems may interpret sensory information to identify appropriate navigation paths, as well as obstacles, free-space areas, and/or relevant signage.

An imperative aspect of achieving reliable ADS functionality for the intended vehicles is to obtain a comprehensive understanding of the scenarios occurring in the surrounding environment of the vehicle. The unpredictable and dynamic scenarios including situations, events or objects in the surrounding environment of the vehicle and on the roads on which the vehicle is travelling can involve nearly endless varieties and complexities. In other words, there is a need for immense amounts of data (sensor data logged by vehicles, output data from various ADS functions, metadata, etc.) for achieving reliable autonomous functionality.

A consequence of this requirement for large amounts of data for development and verification of ADS functionality is that one inevitably ends up with huge databases that generally are troublesome to navigate, and often rely upon the user's expertise and knowledge of the data model in the database to access relevant information. There is accordingly a need for data models that allow for improved accessibility of data within large databases for ADS development and verification.

### SUMMARY

The herein disclosed technology seeks to mitigate, alleviate or eliminate one or more of the above-identified deficiencies and disadvantages in the prior art to address various problems relating to accessibility of large datasets related to automated driving systems.

Various aspects and embodiments of the disclosed technology are defined below and in the accompanying independent and dependent claims.

A first aspect of the disclosed technology comprises a method for accessing a dataset comprising a plurality of data samples from multiple data sources. The plurality of data samples includes sensor data samples captured by one or more vehicles that include information about a surrounding environment of the vehicle, where each sensor data sample is represented by a corresponding sensor data embedding that has been generated by processing the sensor data sample through a sensor data embedding network that has been trained to process sensor data samples and to output a corresponding sensor data embedding for each sensor data sample in a multi-dimensional vector space. The plurality of data samples further includes auxiliary data samples, where each auxiliary data sample is represented by a corresponding auxiliary data embedding that has been generated by processing the auxiliary data sample through an auxiliary data embedding network that has been trained to process auxiliary data samples and to output a corresponding auxiliary data embedding in the multi-dimensional vector space. Moreover, the auxiliary data embedding network has been trained in association with the sensor data embedding network such that an auxiliary embedding of an auxiliary data sample that is associated with a specific sensor data sample points towards the same point as the sensor data embedding of that sensor data sample within the multi-dimensional vector space. The method comprises in response to obtaining a query embedding, identifying one or more embeddings within the multi-dimensional vector space based on a proximity to the obtained query embedding within the multi-dimensional vector space. The query embedding has been generated by processing a query through a query embedding network that has been trained to process queries and to output a corresponding query embedding for each query in the multi-dimensional vector space. Moreover, the query embedding network has been trained in association with the sensor data embedding network such that a query embedding of a query that is associated with a specific sensor data sample points towards the same point as the sensor data embedding of that sensor data sample within the multi-dimensional vector space. The method further comprises outputting one or more data samples within the dataset that are represented by the identified embeddings.

A second aspect of the disclosed technology comprises a computer program product comprising instructions which, when the program is executed by a computing device, causes the computing device to carry out the method according to any one of the embodiments of the first aspect disclosed herein. With this aspect of the disclosed technology, similar advantages and preferred features are present as in the other aspects.

A third aspect of the disclosed technology comprises a (non-transitory) computer-readable storage medium comprising instructions which, when executed by a computing device, causes the computing device to carry out the method according to any one of the embodiments of the first aspect disclosed herein. With this aspect of the disclosed technology, similar advantages and preferred features are present as in the other aspects.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM).

Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

A fourth aspect of the disclosed technology comprises a system for accessing a dataset comprising a plurality of data samples from multiple data sources. The plurality of data samples includes sensor data samples captured by one or more vehicles that include information about a surrounding environment of the vehicle, where each sensor data sample is represented by a corresponding sensor data embedding that has been generated by processing the sensor data sample through a sensor data embedding network that has been trained to process sensor data samples and to output a corresponding sensor data embedding for each sensor data sample in a multi-dimensional vector space. The plurality of data samples further includes auxiliary data samples, where each auxiliary data sample is represented by a corresponding auxiliary data embedding that has been generated by processing the auxiliary data sample through an auxiliary data embedding network that has been trained to process auxiliary data samples and to output a corresponding auxiliary data embedding in the multi-dimensional vector space. Moreover, the auxiliary data embedding network has been trained in association with the sensor data embedding network such that an auxiliary embedding of an auxiliary data sample that is associated with a specific sensor data sample points towards the same point as the sensor data embedding of that sensor data sample within the multi-dimensional vector space. The system comprises control circuitry configured to in response to obtaining a query embedding, identify one or more embeddings within the multi-dimensional vector space based on a proximity to the obtained query embedding within the multi-dimensional vector space. The query embedding has been generated by processing a query through a query embedding network that has been trained to process queries and to output a corresponding query embedding for each query in the multi-dimensional vector space. Moreover, the query embedding network has been trained in association with the sensor data embedding network such that a query embedding of a query that is associated with a specific sensor data sample points towards the same point as the sensor data embedding of that sensor data sample within the multi-dimensional vector space. The control circuitry is further configured to output one or more data samples within the dataset that are represented by the identified embeddings. With this aspect of the disclosed technology, similar advantages and preferred features are present as in the other aspects.

The disclosed aspects and preferred embodiments may be suitably combined with each other in any manner apparent to anyone of ordinary skill in the art, such that one or more features or embodiments disclosed in relation to one aspect may also be considered to be disclosed in relation to another aspect or embodiment of another aspect.

An advantage of some embodiments is that relevant data samples from immense datasets collected from vehicles may be accessed in a facilitated and expedited manner.

An advantage of some embodiments is that data pertaining to particular scenes or scenarios useful in development, testing and verification can be extracted in an efficient manner from large datasets.

Further embodiments are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the disclosed technology will in the following be further clarified with reference to the embodiments described hereinafter.

### BRIEF DESCRIPTION OF THE DRAWINGS

The above aspects, features and advantages of the disclosed technology, will be more fully appreciated by reference to the following illustrative and non-limiting detailed description of example embodiments of the present disclosure, when taken in conjunction with the accompanying drawings, in which:
Fig. 1 is a schematic block diagram representation of a system for accessing a dataset comprising a plurality of data samples from multiple data sources in accordance with some embodiments.
Fig. 2 is a schematic illustration of a system for accessing a dataset comprising a plurality of data samples from multiple data sources, a schematic illustration of a server comprising such a system, and a cloud environment comprising a plurality of servers in accordance with some embodiments.
Fig. 3 is a schematic flowchart representation of a method for accessing a dataset comprising a plurality of data samples from multiple data sources in accordance with some embodiments.

### DETAILED DESCRIPTION

The present technology will now be described in detail with reference to the accompanying drawings, in which some example embodiments of the disclosed technology are shown. The disclosed technology may, however, be embodied in other forms and should not be construed as limited to the disclosed example embodiments. The disclosed example embodiments are provided to fully convey the scope of the disclosed technology to the skilled person. Those skilled in the art will appreciate that the steps, services and functions explained herein may be implemented using individual hardware circuitry, using software functioning in conjunction with a programmed microprocessor or general-purpose computer, using one or more Application Specific Integrated Circuits (ASICs), using one or more Field Programmable Gate Arrays (FPGA) and/or using one or more Digital Signal Processors (DSPs).

It will also be appreciated that when the present disclosure is described in terms of a method, it may also be embodied in apparatus comprising one or more processors, one or more memories coupled to the one or more processors, where computer code is loaded to implement the method. For example, the one or more memories may store one or more computer programs that causes the apparatus to perform the steps, services and functions disclosed herein when executed by the one or more processors in some embodiments.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative.

It will also be understood that, although the term first, second, etc. may be used herein to describe various elements or features, these elements should not be limited by these terms. These terms are only used to distinguish one element from another. For example, a first signal could be termed a second signal, and, similarly, a second signal could be termed a first signal, without departing from the scope of the embodiments. The first signal and the second signal are both signals, but they are not the same signal.

### Overview

As mentioned, an imperative aspect of achieving reliable ADS functionality for the vehicles of tomorrow is to obtain a comprehensive understanding of the scenarios occurring in the surrounding environment of the vehicle. The unpredictable and dynamic scenarios including situations, events or objects in the surrounding environment of the vehicle and on the roads on which the vehicle is travelling can involve nearly endless varieties and complexities. In other words, there is a need for immense amounts of data (sensor data logged by vehicles and thereto associated metadata) for achieving reliable autonomous functionality.

Moreover, currently these immense amounts of sensor data are often collected by a fleet of dedicated test vehicles (may also be referred to as development vehicles). However, as the production vehicles get more and more capable, they also provide a significant amount of sensor data. In either case, huge sensor datasets are collected for the intended purpose of developing, verifying and/or testing current and new functions of the ADS. However, it is not only the sensor data collected from the vehicles that are useful in the developing, verifying and/or testing current and new functions of the ADS, there is also a need for auxiliary datasets (weather data, map data, ADS data, DMS data, and thereto associated metadata) to be able to fully understand the field test data and to improve and/or test the ADS functions.

Conventionally, these immense datasets are stored in a conventional database that can be searched based on a static metadata search. However, the data models used in these conventional databases is complicated, which reduces the availability of data since searching the database and extracting relevant data samples is heavily reliant on the expertise of the user. Moreover, the task of building these data models and properly storing the data samples may be an insurmountable task, in particular in the field of automated driving systems as these datasets are generated by different data sources and come in endless variations. In more detail, the accessibility of these datasets is often very reliant on the associated metadata of each data sample, which is static and defined by one or more users following some defined guidelines. However, it is difficult to foresee future needs in terms of accessibility and retrieval of data, which consequently results in a risk that the previous setup becomes outdated and incompatible with future needs

To this end, the herein disclosed technology proposes a solution to unlock at least part of the full value of the available dataset and making it searchable using embeddings. In more detail, it is herein proposed to use embeddings as the bearer of information regardless of the data source, where the embeddings are generated for the collected data samples and stored in a database with a link back to the actual data sample to track their exact data source. Thereby, full free text and/or image searches of the entire dataset may be enabled.

Accordingly, some embodiments herein propose an architecture where one embedding network serves as a basis for training the subsequent embedding networks. In more detail, once a sensor data embedding network has been trained to generate sensor data embeddings, one can train a query embedding network to against the sensor data embedding network so that the generated query embeddings that are associated with a particular sensor data sample points towards the same point as the corresponding sensor data embedding of that particular sensor data sample in the multi-dimensional vector space. This can for example be done by creating training examples with training pairs of queries and corresponding sensor data samples as known in the art of machine learning. For example, a training pair could be the query "stop signs" and then sensor data samples (e.g., camera images) of stop signs are retrieved and their corresponding embeddings are used to form a ground truth for the query embedding network. Thereby one attains a connection between queries and the sensor data samples, and searching for specific sensor data samples with e.g., free text queries is enabled.

Then, for any subsequent embedding network ("auxiliary embedding network") for other data sources (e.g., ADS output samples, DMS output samples, map data, etc), an analogous training process is performed. In other words, in order to add map data samples to the database and have them linked to the appropriate sensor data samples, a map data embedding network is trained against the sensor data embedding network so that the generated map data embeddings that are associated with a particular sensor data sample points towards the same point as the corresponding sensor data embedding of that particular sensor data sample in the multi-dimensional vector space.

By further adding these auxiliary data samples from other data sources, a more nuanced and powerful search for relevant data samples in the database is achievable. For example, just by adding the map data samples to the already connected sensor data samples and queries - one enables a user to for example retrieve relevant data samples for a query in the form of "pedestrians on a country road in Germany" due to the connection between sensor data samples (e.g., images of pedestrians) and the map data (geographic location and road type). Without the connection between different data sources such a query would either be impossible or simply render erroneous/inaccurate results.

In some embodiments, the sensor data embedding network is a first sensor data embedding network configured to generate sensor data embeddings for a sensor samples captured by a first sensor. In more detail, the first sensor data embedding may be camera image embedding network and the first sensor may accordingly be a camera. For any other sensor type (e.g., Lidar, Radar, etc) additional embedding networks may be provided and trained in an analogous fashion as described in the foregoing with respect to the query embedding network and the auxiliary embedding network. Thus, the "basis" embedding network" may be a camera image embedding network.

### Definitions

In the present context, an "Automated Driving System" ("ADS") refers to a complex combination of hardware and software components designed to control and operate a vehicle without direct human intervention. ADS technology aims to automate various aspects of driving, such as steering, acceleration, deceleration, and monitoring of the surrounding environment. The primary goal of an ADS is to enhance safety, efficiency, and convenience in transportation. An ADS can range from basic driver assistance systems to highly advanced autonomous driving systems, depending on its level of automation, as classified by standards like the SAE J3016. These systems use a variety of sensors, cameras, radar, lidar, and powerful computer algorithms to perceive the environment and make driving decisions. The specific capabilities and features/functions of an ADS can vary widely, from systems that provide limited assistance to those that can handle complex driving tasks independently in specific conditions.

Advanced Driver Assistance Systems (ADAS) are technologies that assist drivers in the driving process, though they do not necessarily offer full autonomy. ADAS features often serve as building blocks for ADS. Examples include adaptive cruise control, lane-keeping assist, automatic emergency braking, and parking assistance. They enhance safety and convenience but typically require some level of human supervision and intervention. On the other hand, Autonomous Driving (AD) are technologies that are designed to control and navigate a vehicle without human supervision. Accordingly, it can be said that distinction between ADAS and AD lies in the level of autonomy and control. ADAS systems are designed to aid and support drivers, while an AD aims to take full control of the vehicle without requiring constant human oversight. AD accordingly aims for higher levels of autonomy (such as Levels 4 and 5, according to the SAE International standard), where the vehicle can operate independently in most or all driving scenarios without human intervention. As mentioned in the foregoing, the term "ADS" in used herein as an umbrella term encompassing both ADAS and AD. An ADS function or ADS feature may in the present context be understood as a specific function or feature of the entire ADS stack, such as e.g., a Highway Pilot feature, a Traffic-Jam pilot feature, a path planning feature, and so forth.

In the present context, a "sensor" or "sensor device" refers to a specialized component or system that is designed to capture and gather information from the vehicle's surroundings. These sensors play a crucial role in enabling the ADS to perceive and understand their environment, make informed decisions, and navigate safely. Sensors are typically integrated into the autonomous vehicle's hardware and software systems to provide real-time data for various tasks such as obstacle detection, localization, road model estimation, and object recognition. Common types of sensors used in autonomous driving include LiDAR (Light Detection and Ranging), Radar, Cameras, and Ultrasonic sensors. LiDAR sensors use laser beams to measure distances and create high-resolution 3D maps of the vehicle's surroundings. Radar sensors use radio waves to determine the distance and relative speed of objects around the vehicle. Camera sensors capture visual data, allowing the vehicle's computer system to recognize traffic signs, lane markings, pedestrians, and other vehicles. Ultrasonic sensors use sound waves to measure proximity to objects. Various machine learning algorithms (such as e.g., artificial neural networks) may be employed to process the output from the sensors to make sense of the environment.

In the present context, the term "data sample" refers to a subset of data taken from a larger dataset or population. In particular, the "data samples" may be collected by sampling data collected by a fleet of ADS-equipped vehicles or by sampling data from other data sources external to the vehicles (e.g., simulation data). The data may be sampled with a suitable sample rate given the size of dataset. For example, the data may be sampled with 1 second intervals, 5 second intervals, 10 second intervals, or the like. In some examples, the data samples include "sensor data samples" and "auxiliary data samples".

The term "sensor data sample" may be interpreted as a specific instance or set of data collected by the sensors installed on the ADS-equipped vehicles at a particular moment in time or within a specific timeframe. The sensor data samples typically comprise various types of information captured by the sensors, such as camera images, lidar output, radar output, GPS coordinates, accelerometer readings, and other sensor-generated data. The "sensor data samples" may include connected meta data (e.g., timestamps, location information, vehicle information, log duration, etc.).

The term "auxiliary data samples" may be interpreted as data sampled from the dataset that are not generated by the vehicles' sensors. Some examples of auxiliary data include map data, ADS data, Driving Monitoring System (DMS) data, and weather data. The map data samples may for example include HD map data samples (e.g., defined geographical areas in the HD map). The ADS data samples may for example include perception output (e.g., object detections, semantic segmentations, detected lane markings, detected lanes, object classifications, free-space estimations, etc.), path planning output (e.g., candidate paths, executed paths, etc.), trajectory planning output (e.g., candidate trajectories, executed trajectories, etc.), hardware error logs, software error logs, and so forth. In some embodiments, the ADS data samples include the output from one or more ADS functions (e.g., path planners, trajectory planners, perception systems, decision and control functions, safety functions, etc.). The DMS data samples may for example include a state of the driver (e.g., attentive, drowsy, tired, distracted, etc.). The weather data samples may for example include weather data (e.g., precipitation, temperature, visibility, etc.). The "auxiliary data samples" may also include connected meta data (e.g., timestamps, location information, vehicle information, log duration, etc.).

A driver monitoring system (DMS) can be understood as a system comprising one or more cameras focused on a driver of the vehicle in order to capture images of the driver's face so to determine various facial characteristics of the driver including the position, orientation, and movement of the driver's eyes, face and head. Moreover, the DMS may be further configured to derive a state of the driver based on the determined facial characteristics, such as e.g., if the driver is in an attentive or inattentive state, if the driver is tired, if the driver is drowsy, and so forth.

The term "embedding network" ("embedding neural network" or "embedding artificial neural network") refers to a computational model or set of techniques that are used to enable a computer to generate an embedding for an input data sample, where an "embedding" may be understood as a mathematical representation of data. In more detail, the "embedding network" is used to transform high-dimensional data into a lower-dimensional space (multi-dimensional vector space) while preserving meaningful relationships between the input data points.

Embedding networks are for example used for tasks like natural language processing (NLP) and computer vision. These networks take raw input data, such as words in a sentence or images, and convert them into fixed-size, numerical vectors (embeddings) that capture essential characteristics or features of the input data. In more detail, in NLP, the embedding networks convert words into numerical vectors, where words with similar meanings or contextual usage are represented closer to each other in the embedding space (multi-dimensional vector space). Similarly, in computer vision, the embedding networks convert images to numerical vectors, enabling the network to understand visual similarities, like grouping similar objects or scenes closer together in the embedding space (multi-dimensional vector space).

Neural networks or artificial neural networks, emulate computing systems inspired by biological neural networks found in animal brains. These systems exhibit learning capabilities, progressively enhancing their performance without requiring task-specific programming. For instance, in image recognition, a neural network can be trained to detect specific objects within images by analysing labelled example images. Once it grasps the correlation between objects and their names, it can apply this knowledge to identify similar objects in unlabelled images.

Fundamentally, a neural network consists of interconnected units known as neurons, connected by synapses that transmit signals of varying strengths. These signals travel unidirectionally, activating receiving neurons based on the strength of these connections. When the combined incoming signals, originating from multiple transmitting neurons, reach a certain threshold, the receiving neuron activates and transmits a signal to downstream neurons. This activation strength becomes a crucial parameter governing signal propagation within the network.

Moreover, during the training of a neural network architecture, regression-comprised of statistical processes for understanding variable relationships-can involve minimizing a cost function. This function gauges the network's performance in accurately linking training examples to their intended outputs. If, during training, this cost function value falls outside a predefined range based on known training data, a technique called backpropagation is employed. Backpropagation, a widely used method for training artificial neural networks, collaborates with optimization methods like stochastic gradient descent (SGD).

Moreover, use of backpropagation can include propagation and weight update. Backpropagation involves two key steps: propagation and weight adjustment. When an input enters the neural network, it moves forward through each layer until it reaches the output layer. Here, the neural network's output is measured against the desired output using a cost function, generating an error value for each output node. These errors then flow backward, starting from the output layer, assigning error values to each node based on its contribution to the final output. These error values are pivotal-they aid in computing the cost function's gradient concerning the neural network's weights. This gradient guides the selected optimization technique, adjusting the weights to minimize the cost function.

Accordingly, the embedding network itself comprises layers of neural network architecture, often employing techniques like convolutional layers, recurrent layers, or fully connected layers to learn and extract meaningful patterns from the input data. The embedding networks may be trained through processes like supervised learning, unsupervised learning, or self-supervised learning to optimize the embeddings for specific downstream tasks, such as classification, clustering, or recommendation. In some embodiments, the various embedding networks are trained to generate embeddings in the same embedding space (the same multi-dimensional vector space) so that embeddings (generated by different embedding networks) that are contextually, spatially and/or temporally related point towards the same point within the multi-dimensional vector space.

This may for example be done by training a first embedding network, to generate embeddings in a multi-dimensional vector space, based on input data from a first data source. Then, each of the other embedding networks are trained "against" or in association with the first embedding network so that the embeddings of the other networks that are contextually, spatially and/or temporally related with the embeddings of the first embedding network point towards the same point within the multi-dimensional vector space as the related embeddings of the first embedding network. For example, if the first embedding network is trained to generate image embeddings for camera images and a second embedding network is intended to generate embeddings for Lidar data, then the second embedding network may be trained by feeding the second embedding network with lidar data of a scene where corresponding image embeddings (of that scene) will be used as basis for forming a ground-truth (desired output). By doing this process for each subsequent embedding network one may obtain a set of embedding networks capable of ingesting outputs from various data sources and output corresponding embeddings where contextual, spatial and/or temporal relations are represented by the proximity or similarly in direction of the embeddings (vectors) in the multi-dimensional vector space.

### Embodiments

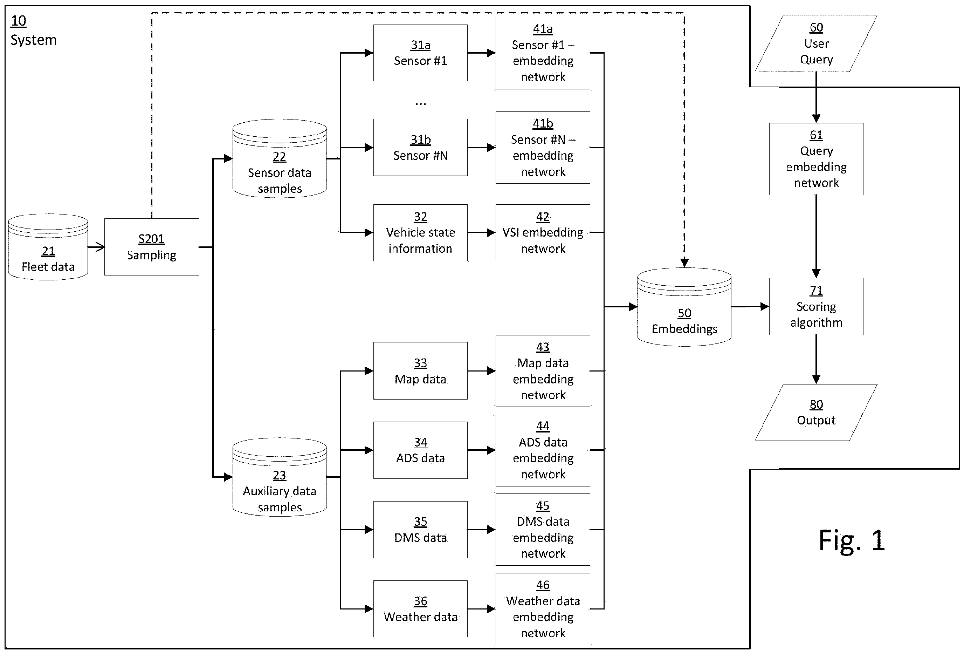

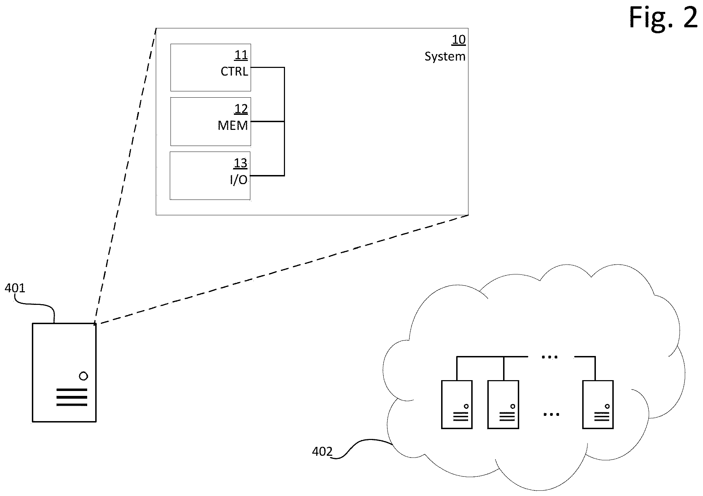

Fig. 1 is a schematic block diagram representation of a system 10 for accessing a dataset comprising a plurality of data samples from multiple data sources 31a, 31b, 32-36 in accordance with some embodiments. The system 10 comprises control circuitry 11 (e.g. one or more processors - see Fig. 2) configured to perform the functions of the method S100 disclosed herein, where the functions may be included in a non-transitory computer-readable storage medium 12 or other computer program product configured for execution by the control circuitry 11. In other words, the system 10 comprises one or more memory storage areas 12 comprising program code, the one or more memory storage areas 12 and the program code configured to, with the one or more processors 11, cause the system 10 to perform the method S100 according to any one of the embodiments disclosed herein. However, in order to better elucidate the herein disclosed embodiments, the control circuitry is represented as various parts or blocks in Fig. 1, each of them linked to one or more specific functions of the control circuitry.

In more detail, Fig. 1 outlines an example architecture of the system 10 in accordance with some embodiments. Fleet data (may also be referred to as "probe data" where test vehicles and/or production vehicles act as "probes") 21 is sampled S201 at some defined sample rate depending on the amount of data 21 that is provided. For example, with 60 000 hours of data available, a sample rate of one data sample per 10 seconds would result in a dataset comprising 21,6 million data samples. In some embodiments, the probe data is collected at a fixed frequency (e.g., during certain times of the day) or in a more dynamic manner where the probe data is collected based on conditional triggers detected by the vehicles.

Further, the sampled data is divided into two data repositories, one sensor data repository 22 and one auxiliary data repository 23. This mainly done for illustrative purposes, all data samples may be stored in a "common repository" or divided into further repositories depending on specific realizations and requirements.

Accordingly, the plurality of data samples comprises sensor data samples 31a captured by one or more vehicles that include information about a surrounding environment of the vehicle. Here, each sensor data sample 31a is represented by a corresponding sensor data embedding that has been generated by processing the sensor data sample 31a through a sensor data embedding network 41a that has been trained to process sensor data samples 31a and to output a corresponding sensor data embedding for each sensor data sample 31a in a multi-dimensional vector space. As illustrated in Fig. 1, the system 10 may comprise additional sensor data embedding networks 41b. In particular, the system 10 may comprise one sensor data embedding network 41a, 41b, 42 for each sensor 31a, 31b, 32 of the vehicle or one sensor data embedding network 41a, 41b, 42 for each sensor type/modality. The vehicle state information may for example comprise a speed, location and/or angular velocity of the vehicle as output by an Inertial Measurement Unit (IMU) and/or Global Navigation Satellite System (GNSS) of the vehicle.

The plurality of data samples further comprises auxiliary data samples 23, where each auxiliary data sample is represented by a corresponding auxiliary data embedding that has been generated by processing the auxiliary data sample through an auxiliary data embedding network 43-46 that has been trained to process auxiliary data samples and to output a corresponding auxiliary data embedding in the multi-dimensional vector space. Moreover, the auxiliary data embedding network 43-46 has been trained in association with the sensor data embedding network 41a such that an auxiliary embedding of an auxiliary data sample that is associated with a specific sensor data sample points towards the same point as the sensor data embedding of that sensor data sample within the multi-dimensional vector space. As with the sensor data embedding networks 41a, 41b, 42, the system 10 may comprise one auxiliary data embedding network 43-46 for each auxiliary data source 33-36. For example, the system 10 may comprise a map data embedding network 43, an Automated Driving System (ADS) data embedding network 44, a Driver Monitoring System (DMS) data embedding network 45, and a weather data embedding network 46. Naturally, further auxiliary data embedding networks may be added to the system 10 depending on the availability of auxiliary data samples.

Accordingly, the auxiliary data samples 23 may include map data samples 33. Each map data sample 33 is then represented by a corresponding map data embedding that has been generated by processing the map data sample 33 through a map data embedding network 43 that has been trained to process map data samples 33 and to output a corresponding map data embedding in the multi-dimensional vector space. Moreover, the map data embedding network 43 has been trained in association with the sensor data embedding network 41a such that a map embedding of a map data sample 33 that is associated with a specific sensor data sample 31a, points towards the same point as the sensor data embedding of that sensor data sample 31a within the multi-dimensional vector space. The map data samples 33 may for example be HD-map data samples. The map data samples 33 and sensor data samples 31a may for example be linked through the associated metadata of the sensor data samples 31a indicating where a particular sensor data sample was originally captured/generated.

Moreover, the auxiliary data samples 23 may include ADS data samples 34. Each ADS data sample 34 is then represented by a corresponding ADS data embedding that has been generated by processing the ADS data sample 34 through an ADS data embedding network 44 that has been trained to process ADS data samples 34 and to output a corresponding ADS data embedding in the multi-dimensional vector space. Furthermore, the ADS data embedding network 44 has been trained in association with the sensor data embedding network 31a such that an ADS embedding of an ADS data sample 34 that is associated with a specific sensor data sample 31a points towards the same point as the sensor data embedding of that sensor data sample 31a within the multi-dimensional vector space. The ADS data samples 34 and the sensor data samples 31a may for example be linked through the associated metadata of the sensor data samples 31a and the ADS data samples 34 indicating when a particular sensor data sample 31a was originally captured/generated, and indicating when and where a particular ADS data sample 34 was output/generated.

Still further, the auxiliary data samples 23 may include Driver Monitoring System (DMS) data samples 35. Each DMS data sample 35 is represented by a corresponding DMS data embedding that has been generated by processing the DMS data sample 35 through an DMS data embedding network 45 that has been trained to process DMS data samples 35 and to output a corresponding DMS data embedding in the multi-dimensional vector space. Moreover, the DMS data embedding network 45 has been trained in association with the sensor data embedding network 31a such that a DMS embedding of an DMS data sample 35 that is associated with a specific sensor data sample 31a points towards the same point as the sensor data embedding of that sensor data sample 31a within the multi-dimensional vector space. The DMS data samples 35 and the sensor data samples 31a may for example be linked through the associated metadata of the sensor data samples 31a and the DMS data samples 35 indicating when and where a particular sensor data sample 31a was originally captured/generated and indicating when and where a particular DMS data sample 35 was output/generated.

Yet further, the auxiliary data samples may include weather data samples 36. Each weather data sample 36 is represented by a corresponding weather data embedding that has been generated by processing the weather data sample 36 through a weather data embedding network 46 that has been trained to process weather data samples 36 and to output a corresponding weather data embedding in the multi-dimensional vector space. Moreover, the weather data embedding network 46 has been trained in association with the sensor data embedding network 31a such that a weather embedding of a weather data sample 36 that is associated with a specific sensor data sample 31a points towards the same point as the sensor data embedding of that sensor data sample 31a within the multi-dimensional vector space. The weather data samples 36 and the sensor data samples 31a may for example be linked through the associated metadata of the sensor data samples 31a and the weather data samples 36 indicating when and where a particular sensor data sample 31a was originally captured/generated, and indicating when and where a particular weather data sample 36 was output/generated.

The system accordingly has a set of data samples collected from the fleet data 21, where each data source 31a, 31b, 32-36 is associated with a corresponding embedding network 41, 41b, 42-46 trained to output an embedding for an input data sample. The embeddings are then stored in a suitable data repository 50, which further may comprise links to respective data samples.

Furthermore, the system 10 comprises control circuitry 11 configured to, in response to obtaining a query embedding, identify one or more embeddings 50 within the multi-dimensional vector space based on a proximity to the obtained query embedding within the multi-dimensional vector space.

Here, the query embedding has been generated by processing a query 60 through a query embedding network 61 that has been trained to process queries 60 and to output a corresponding query embedding for each query in the multi-dimensional vector space. Moreover, the query embedding network 61 has been trained in association with the sensor data embedding network 31a such that a query embedding of a query 60 that is associated with a specific sensor data sample 31a points towards the same point as the sensor data embedding of that sensor data sample 31a within the multi-dimensional vector space. The queries 60 may be in the form of text queries, image queries, or a combination thereof.

The system 10 may comprise the query embedding network 61, and accordingly the control circuitry 11 may be configured to receive the queries from a client device, and process the queries 60 using the query embedding network 60 in order to generate query embeddings. However, in some embodiments the query embedding network 61 is external to the system 10, and the query embeddings are received from the client device.

The control circuitry 11 may be configured to identify the one or more sensor data and/or auxiliary data embeddings within the multi-dimensional vector space by identifying the one or more sensor data and/or auxiliary data embeddings that are within a distance value from the obtained query embedding within the multi-dimensional vector space. The term "that are within a distance value" may be construed as "that fulfil a distance metric". This is represented by a scoring algorithm block 71 of the system 10 in Fig. 1, where the scoring algorithm is configured to score embeddings based on their relevancy as defined by the distance values from the query embedding. Some suitable distance metrics that may be used are Euclidian Distance, Manhattan Distance, or Cosine distance.

Further, the control circuitry 11 is configured to output one or more data samples 80 within the dataset that are represented by the identified embeddings. In other words, once the query embedding is received or otherwise obtained, its "position" in the multi-dimensional vector space is evaluated and the relevant sensor data and/or auxiliary data embeddings are retrieved based on their proximity to the query embedding. For example, any sensor data or auxiliary data embeddings that are within a Euclidian/Manhattan/Cosine distance vale (distance threshold) from the query embedding are selected as relevant embeddings, and their linked data samples are accordingly output.

Turning briefly to Fig. 2, which is a schematic illustration of a system 10 for accessing a dataset comprising a plurality of data samples from multiple data sources, a schematic illustration of a server 401 comprising such a system, and a cloud environment 402 comprising a plurality of servers 401 in accordance with some embodiments.

As mentioned, the system 10 comprises control circuitry (e.g. one or more processors) 11 configured to perform the functions of the method S100 disclosed herein, where the functions may be included in a non-transitory computer-readable storage medium 12 or other computer program product configured for execution by the control circuitry 11. In other words, the system 10 comprises one or more memory storage areas 12 comprising program code, the one or more memory storage areas 12 and the program code configured to, with the one or more processors 11, cause the system 10 to perform the method according to any one of the embodiments disclosed herein.

The control circuitry 11 may physically comprise one single circuitry device. Alternatively, the control circuitry 11 may be distributed over several circuitry devices. The control circuitry 11 may comprise one or more processors, such as a central processing unit (CPU), microcontroller, or microprocessor. The one or more processors may be configured to execute program code stored in the memory 12, in order to carry out various functions and operations in addition to the methods disclosed herein. The processor(s) 11 may be or include any number of hardware components for conducting data or signal processing or for executing computer code stored in the memory 12. The memory 12 optionally includes high-speed random-access memory, such as DRAM, SRAM, DDR RAM, or other random-access solid-state memory devices, and optionally includes non-volatile memory, such as one or more magnetic disk storage devices, optical disk storage devices, flash memory devices, or other non-volatile solid-state storage devices. The memory 12 may include database components, object code components, script components, or any other type of information structure for supporting the various activities of the present description.

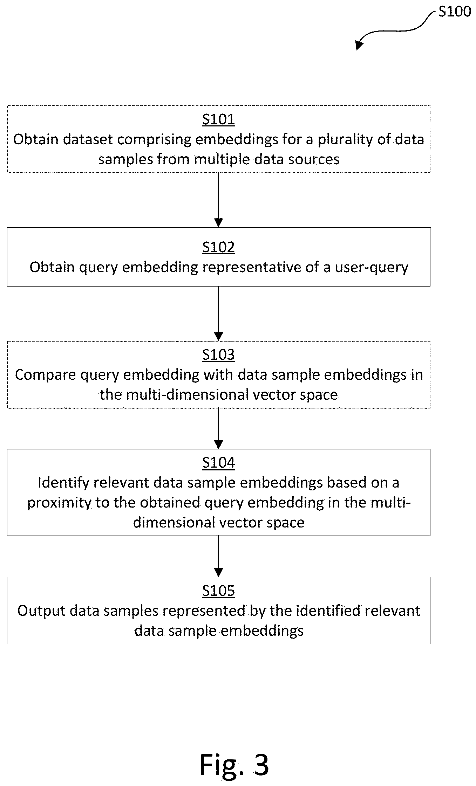

Fig. 3 is a schematic flowchart representation of a method S100 for accessing a dataset comprising a plurality of data samples from multiple data sources in accordance with some embodiments. The method S100 is preferably a computer-implemented method S100, performed by a processing system of a computer. The processing system may for example comprise one or more processors and one or more memories coupled to the one or more processors, wherein the one or more memories store one or more programs that perform the steps, services and functions of the method S100 disclosed herein when executed by the one or more processors.

In some embodiments, the method S100 comprises obtaining a dataset comprising embeddings for a plurality of data samples from multiple data sources.

As before, the plurality of data samples includes sensor data samples captured by one or more vehicles that include information about a surrounding environment of the vehicle. Each sensor data sample is represented by a corresponding sensor data embedding that has been generated by processing the sensor data sample through a sensor data embedding network that has been trained to process sensor data samples and to output a corresponding sensor data embedding for each sensor data sample in a multi-dimensional vector space.

Moreover, the plurality of data samples includes auxiliary data samples, where each auxiliary data sample is represented by a corresponding auxiliary data embedding that has been generated by processing the auxiliary data sample through an auxiliary data embedding network that has been trained to process auxiliary data samples and to output a corresponding auxiliary data embedding in the multi-dimensional vector space. The auxiliary data embedding network has been trained in association with the sensor data embedding network such that an auxiliary embedding of an auxiliary data sample that is associated with a specific sensor data sample points towards the same point as the sensor data embedding of that sensor data sample within the multi-dimensional vector space.

The method S100 comprises obtaining S102 a query embedding. In some embodiments, the query embedding is received from an external entity (such as a client device - e.g., general-purpose computer). However, in some embodiments, the method S100 comprises receiving a query from a client device, and generating a query embedding, by processing the received query with the query embedding network. The term "obtaining" is herein to be interpreted broadly and encompasses receiving, retrieving, collecting, acquiring, and so forth directly and/or indirectly between two entities configured to be in communication with each other or further with other external entities. However, in some embodiments, the term "obtaining" is to be construed as determining, deriving, forming, computing, etc. Thus, as used herein, "obtaining" may indicate that a parameter is received at a first entity/unit from a second entity/unit, or that the parameter is determined at the first entity/unit e.g. based on data received from another entity/unit.

Further, in response to obtaining S102 the query embedding, the method S100 comprises identifying S104 one or more embeddings within the multi-dimensional vector space based on a proximity to obtained query embedding within the multi-dimensional vector space. Here, the query embedding has been generated by processing a query through a query embedding network that has been trained to process queries and to output a corresponding query embedding for each query in the multi-dimensional vector space. Moreover, the query embedding network has been trained in association with the sensor data embedding network such that a query embedding of a query that is associated with a specific sensor data sample points towards the same point as the sensor data embedding of that sensor data sample within the multi-dimensional vector space.

Further, the method S100 comprises outputting S105 one or more data samples within the dataset represented by the identified sensor data embeddings and/or auxiliary data embeddings. The outputting S105 of the one or more data samples may comprise transmitting the one or more data samples to the client device.

Furthermore, in some embodiments, the identification S104 of one or more embeddings within the multi-dimensional vector space comprises identifying S104 the one or more embeddings that are within a distance value from the obtained query embedding within the multi-dimensional vector space. As before, the term "within a distance value" may be construed as "fulfilling a distance metric", where the distance metric may be that the embeddings that are selected are the embeddings that are within a Euclidian/Manhattan/Cosine distance value (e.g., distance threshold) from the query embedding. Thus, in some embodiments, the method S100 may comprise comparing the obtained S102 query embedding with sensor data embeddings and auxiliary data embeddings within the multi-dimensional vector space in view of a distance metric in order to identify the relevant sensor data embeddings and/or auxiliary data embeddings.

Executable instructions for performing these functions are, optionally, included in a non-transitory computer-readable storage medium or other computer program product configured for execution by one or more processors.

The present invention has been presented above with reference to specific embodiments. However, other embodiments than the above described are possible and within the scope of the invention. Different method steps than those described above, performing the method by hardware or software, may be provided within the scope of the invention. Thus, according to an exemplary embodiment, there is provided a non-transitory computer-readable storage medium storing one or more programs configured to be executed by one or more processors of a computing system, the one or more programs comprising instructions for performing the method according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

The processor(s) 11 (associated with the system 10) may be or include any number of hardware components for conducting data or signal processing or for executing computer code stored in memory 12. The device 10 has an associated memory 12, and the memory 12 may be one or more devices for storing data and/or computer code for completing or facilitating the various methods described in the present description. The memory may include volatile memory or non-volatile memory. The memory 12 may include database components, object code components, script components, or any other type of information structure for supporting the various activities of the present description. According to an exemplary embodiment, any distributed or local memory device may be utilized with the systems and methods of this description. According to some embodiments embodiment the memory 12 is communicably connected to the processor 11 (e.g., via a circuit or any other wired, wireless, or network connection) and includes computer code for executing one or more processes described herein.

It should be noted that any reference signs do not limit the scope of the claims, that the invention may be at least in part implemented by means of both hardware and software, and that several "means" or "units" may be represented by the same item of hardware.

Although the figures may show a specific order of method steps, the order of the steps may differ from what is depicted. In addition, two or more steps may be performed concurrently or with partial concurrence. For example, the steps of receiving signals comprising information about a movement and information about a current road scenario may be interchanged based on a specific realization. Such variation will depend on the software and hardware systems chosen and on designer choice. All such variations are within the scope of the invention. Likewise, software implementations could be accomplished with standard programming techniques with rule-based logic and other logic to accomplish the various obtaining, comparing, identifying and outputting steps. The above mentioned and described embodiments are only given as examples and should not be limiting to the present invention. Other solutions, uses, objectives, and functions within the scope of the invention as claimed in the below described patent claims should be apparent for the person skilled in the art.

## Claims

1. A method (S100) for accessing a dataset comprising a plurality of data samples from multiple data sources, wherein the plurality of data samples includes:
sensor data samples captured by one or more vehicles that include information about a surrounding environment of the vehicle, wherein each sensor data sample is represented by a corresponding sensor data embedding that has been generated by processing the sensor data sample through a sensor data embedding network that has been trained to process sensor data samples and to output a corresponding sensor data embedding for each sensor data sample in a multi-dimensional vector space,
auxiliary data samples, wherein each auxiliary data sample is represented by a corresponding auxiliary data embedding that has been generated by processing the auxiliary data sample through an auxiliary data embedding network that has been trained to process auxiliary data samples and to output a corresponding auxiliary data embedding in the multi-dimensional vector space, and wherein the auxiliary data embedding network has been trained in association with the sensor data embedding network such that an auxiliary embedding of an auxiliary data sample that is associated with a specific sensor data sample points towards the same point as the sensor data embedding of that sensor data sample within the multi-dimensional vector space;
wherein the method (S100) comprises:
in response to obtaining (S102) a query embedding, identifying (S104) one or more embeddings within the multi-dimensional vector space based on a proximity to the obtained query embedding within the multi-dimensional vector space,
wherein the query embedding has been generated by processing a query through a query embedding network that has been trained to process queries and to output a corresponding query embedding for each query in the multi-dimensional vector space, and wherein the query embedding network has been trained in association with the sensor data embedding network such that a query embedding of a query that is associated with a specific sensor data sample points towards the same point as the sensor data embedding of that sensor data sample within the multi-dimensional vector space;
outputting (S105) one or more data samples within the dataset that are represented by the identified embeddings.

2. The method (S100) according to claim 1, wherein the auxiliary data samples include:
map data samples, wherein each map data sample is represented by a corresponding map data embedding that has been generated by processing the map data sample through an map data embedding network that has been trained to process map data samples and to output a corresponding map data embedding in the multi-dimensional vector space, and wherein the map data embedding network has been trained in association with the sensor data embedding network such that a map embedding of a map data sample that is associated with a specific sensor data sample points towards the same point as the sensor data embedding of that sensor data sample within the multi-dimensional vector space.

3. The method (S100) according to claim 1 or 2, wherein the auxiliary data samples include:
ADS data samples, wherein each ADS data sample is represented by a corresponding ADS data embedding that has been generated by processing the ADS data sample through an ADS data embedding network that has been trained to process ADS data samples and to output a corresponding ADS data embedding in the multi-dimensional vector space, and wherein the ADS data embedding network has been trained in association with the sensor data embedding network such that an ADS embedding of an ADS data sample that is associated with a specific sensor data sample points towards the same point as the sensor data embedding of that sensor data sample within the multi-dimensional vector space.

4. The method (S100) according to any one of claims 1-3, wherein the auxiliary data samples include:
DMS data samples, wherein each DMS data sample is represented by a corresponding DMS data embedding that has been generated by processing the DMS data sample through an DMS data embedding network that has been trained to process DMS data samples and to output a corresponding DMS data embedding in the multi-dimensional vector space, and wherein the DMS data embedding network has been trained in association with the sensor data embedding network such that a DMS embedding of an DMS data sample that is associated with a specific sensor data sample points towards the same point as the sensor data embedding of that sensor data sample within the multi-dimensional vector space.

5. The method (S100) according to any one of claims 1-4, wherein the auxiliary data samples include:
weather data samples, wherein each weather data sample is represented by a corresponding weather data embedding that has been generated by processing the weather data sample through a weather data embedding network that has been trained to process weather data samples and to output a corresponding weather data embedding in the multi-dimensional vector space, and wherein the weather data embedding network has been trained in association with the sensor data embedding network such that a weather embedding of a weather data sample that is associated with a specific sensor data sample points towards the same point as the sensor data embedding of that sensor data sample within the multi-dimensional vector space.

6. The method (S100) according to any one of claims 1-5, further comprising:
receiving a query from a client device;
generating a query embedding, by processing the received query with the query embedding network.

7. The method (S100) according to any one of claims 1-6, wherein the identification (S104) of one or more embeddings within the multi-dimensional vector space comprises:
identifying the one or more embeddings that are within a distance value from the obtained query embedding within the multi-dimensional vector space.

8. The method (S100) according to any one of claims 1-7, wherein the query is a text query or an image query.

9. A computer program product comprising instructions which, when the program is executed by a computer, causes the computer to carry out the method (S100) according to any one of claims 1-8.

10. A computer-readable storage medium comprising instructions which, when executed by a computer, causes the computer to carry out the method (S100) according to any one of claims 1-8.

11. A system (10) for accessing a dataset comprising a plurality of data samples from multiple data sources, wherein the plurality of data samples includes:
sensor data samples (22) captured by one or more vehicles that include information about a surrounding environment of the vehicle, wherein each sensor data sample (22) is represented by a corresponding sensor data embedding that has been generated by processing the sensor data sample through a sensor data embedding network (41a, 41b) that has been trained to process sensor data samples and to output a corresponding sensor data embedding for each sensor data sample in a multi-dimensional vector space,
auxiliary data samples (23), wherein each auxiliary data sample is represented by a corresponding auxiliary data embedding that has been generated by processing the auxiliary data sample through an auxiliary data embedding network (43, 44, 45, 46) that has been trained to process auxiliary data samples and to output a corresponding auxiliary data embedding in the multi-dimensional vector space, and wherein the auxiliary data embedding network has been trained in association with the sensor data embedding network (41a, 41b) such that an auxiliary embedding of an auxiliary data sample that is associated with a specific sensor data sample points towards the same point as the sensor data embedding of that sensor data sample within the multi-dimensional vector space;
wherein the system (10) comprises control circuitry (11) configured to:
in response to obtaining a query embedding, identify one or more embeddings within the multi-dimensional vector space based on a proximity to the obtained query embedding within the multi-dimensional vector space,
wherein the query embedding has been generated by processing a query through a query embedding network (61) that has been trained to process queries and to output a corresponding query embedding for each query in the multi-dimensional vector space, and wherein the query embedding network has been trained in association with the sensor data embedding network (41a, 41b ) such that a query embedding of a query that is associated with a specific sensor data sample points towards the same point as the sensor data embedding of that sensor data sample within the multi-dimensional vector space;
output one or more data samples (80) within the dataset that are represented by the identified embeddings.

12. The system (10) according to claim 11, wherein the control circuitry (11) is further configured to:
receive a query (60) from a client device;
generate a query embedding, by processing the received query with the query embedding network (61).

13. The system (10) according to claim 11 or 12, wherein the identification of one or more embeddings within the multi-dimensional vector space comprises:
identifying the one or more embeddings that are within a distance value from the obtained query embedding within the multi-dimensional vector space.

14. A server (401) comprising the system according to any one of claims 11-13.

15. A cloud (402) environment comprising one or more servers according to claim 14.
